(19)

Europäisches
Patentamt
European
Patent Office
Office européen
des brevets

(11) **EP 4 246 879 A1**

(12) **EUROPEAN PATENT APPLICATION**

(43) Date of publication:
**20.09.2023  Bulletin 2023/38**

(21) Application number: **22275030.9**

(22) Date of filing: **18.03.2022**

(51) International Patent Classification (IPC):
**H04L 9/30** $^{(2006.01)}$

(52) Cooperative Patent Classification (CPC):
**H04L 9/3066**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **nCipher Security Limited
Cambridge
CB1 2GA (GB)**

(72) Inventor: **BYGRAVE, Ian David
Cambridge, CB1 2GA (GB)**

(74) Representative: **Marks & Clerk LLP
15 Fetter Lane
London EC4A 1BW (GB)**

(54) **A DEVICE AND A METHOD FOR PERFORMING OPERATIONS**

(57)    A computer implemented method of performing an operation, the method comprising:
obtaining a projective coordinate representation of a first point on a first elliptic curve defined on a finite field, wherein the finite field is defined by a field order;
performing a first operation using the projective coordinate representation of the first point to determine a projective coordinate representation of a second point on the first elliptic curve; and
obtaining an affine coordinate representation of the second point, wherein when the second point is an identity point, the affine coordinate representation comprises an affine coordinate which has a value greater than or equal to the field order.

S101  | Convert input point(s) to projective coordinates |

S102  | Perform operation |

S103  | Convert output point(s) to affine coordinates |

Figure 1

**Description**

Field

The present disclosure relates to a device and a method for performing operations. The operations may be cryptographic operations. The device may comprise a hardware security module device for example.

Background

Elliptic Curve Cryptography (ECC) describes a cryptographic technique in which elliptic curves are used for key agreement schemes, key generation, digital signatures, pseudo-random generators or other cryptographic algorithms.

There is a continuing need to perform such cryptographic algorithms in a manner that makes efficient use of computing resource.

Summary

According to a first aspect, there is provided a computer implemented method of performing an operation, the method comprising:

   obtaining a projective coordinate representation of a first point on a first elliptic curve defined on a finite field, wherein the finite field is defined by a field order;
   performing a first operation using the projective coordinate representation of the first point to determine a projective coordinate representation of a second point on the first elliptic curve; and
   obtaining an affine coordinate representation of the second point, wherein when the second point is an identity point, the affine coordinate representation comprises an affine coordinate which has a value greater than or equal to the field order.

The first operation may be a point multiplication operation, a point addition operation, a point doubling operation or a combination of one or more of these operations.

The method may further comprise providing an affine coordinate representation of the first point, wherein the projective coordinate representation of the first point is obtained from the affine coordinate representation of the first point.

When the second point is an identity point, the affine coordinate representation may comprise a further coordinate which has a value equal to a projective coordinate of the second point.

The field may be a prime field, and the field order a prime number p.

When the second point is the identity point, the affine coordinate may have a value equal to the field order.

The first operation may be performed on a first processor module which supports the first operation.

The first processor module may comprise a set of one or more registers having a bit size of m bits, and wherein when the second point is the identity point, the affine coordinate has a value equal to $(2^m-1)$.

The first processor module may obtain the projective coordinate representation of the first point and obtains the affine coordinate representation of the second point, the method further comprising providing the affine coordinate representation of the second point to the first processor module.

The method may further comprise determining, by the first processor module, whether the second point is the identity point.

Determining whether the second point is the identity point may comprise determining whether the affine coordinate has a value equal to the field order or comprises determining whether the affine coordinate has a value equal to $(2^m-1)$.

Determining whether the second point is the identity point may not comprise confirming the value of the further affine coordinate.

If it is determined that the second point is the identity point, one or more further cryptographic operations may be performed.

According to a further aspect, there is provided a device, comprising a processor module configured to:

   obtain a projective coordinate representation of a first point on a first elliptic curve defined on a finite field, wherein the finite field is defined by a field order;
   perform a first operation using the projective coordinate representation of the first point to determine a projective coordinate representation of a second point on the first elliptic curve; and
   obtain an affine coordinate representation of the second point, wherein when the second point is an identity point, the affine coordinate representation comprises a coordinate which has a value greater than or equal to the field order.

According to another aspect, there is provided a carrier medium comprising computer readable code configured to cause a computer to perform any of the above methods. According to another aspect, there is provided a non-transitory computer readable storage medium comprising program instructions stored thereon that are executable by a computer processor to perform any of the above described methods. The methods are computer-implemented methods. Since some methods in accordance with embodiments can be implemented by software, some embodiments encompass computer code provided to a general purpose computer on any suitable carrier medium. The carrier medium can comprise any storage medium such as a floppy disk, a CD ROM, a magnetic device or a programmable memory device, or any transient medium such as any signal e.g. an electrical, optical or microwave signal. The carrier medium may comprise a non-transitory computer readable storage medium.

Brief Description of the Figures

Devices and methods in accordance with non-limiting embodiments will now be described with reference to the accompanying figures in which:

Figure 1 shows a flow chart illustrating a method according to an embodiment;

Figure 2(a) is a schematic illustration of a device comprising a CPU and a hardware co-processor in accordance with an embodiment;

Figure 2(b) is a schematic illustration of an example hardware co-processor component;

Figure 3 is a flow chart showing a method according to an embodiment;

Figure 4 is a flow chart showing a method according to an embodiment;

Figure 5 is a schematic illustration of a system according to an embodiment, comprising a computing device and a smart card device; and

Figure 6 is a schematic illustration of an example smartcard device.

Detailed Description

Public key cryptographic approaches are generally based on a "one-way function". For a one-way function, it is computationally easy to compute an output for a given input, however computing the input from a given output is computationally hard. Elliptic Curve Cryptography (ECC) is an approach to public key encryption that has become increasingly popular. ECC describes a cryptographic technique in which elliptic curves are used for key agreement schemes, key generation, digital signatures, pseudo-random generators or other cryptographic algorithms.

Hardware components which are specifically configured to perform certain operations based on an elliptic curve are available. Such components efficiently implement a set of one or more elliptic curve operations directly in hardware. Many such components use a fixed format to interface with a further component which provides the inputs to and receives the outputs from the operations. For example, some such hardware components have a fixed interface which returns two affine coordinates (x, y) for each output point. For example, each coordinate of the output point is written into a register of size m bits. As will be explained below, in an example using an elliptic curve defined with a Weierstrass equation, a group is defined comprising the points having affine coordinates (x, y) satisfying the curve equation and a further point $\Omega$, which is referred to as "the point at infinity" or "the identity point". Operations performed on points on the curve return a result in the group. However, since the point at infinity $\Omega$ is not on the curve it does not have well-defined x and y coordinates like the other points in the group. Hardware components which have a fixed interface which returns two affine coordinates (x, y) of each output point may represent the point at infinity $\Omega$ with the affine coordinates x=0 y=0 when it is returned as the result of an operation for example. The coordinates x=0 y=0 do not correspond to a point on any commonly used and standardised elliptic curve. However, this representation does conflict with the use of special purpose elliptic curves which include (0, 0) as a valid point.

Some hardware components instead signal that the result of an operation is $\Omega$ by using a dedicated error status value. However, this representation may require additional memory in the hardware component to be used, additional data to be passed from the hardware component to the further component when providing an output, one or more additional hardware implementations to be included in the hardware component and/or additional hardware or signals in the interface between the hardware component and the further component. For example, on some hardware components, when the point at infinity is returned, an additional transaction retrieves an error status value and restarts the hardware component. This can be a significant interruption to the pipelined flow of work on the hardware component.

In the below described methods, the point at infinity is represented in affine coordinates by the hardware component as (t, *), or alternatively (*, t), where * is any value and t is a value greater than or equal to p, where p is the field order. The points (t, *), or alternatively (*, t), cannot be valid points on the curve. The representation therefore does not conflict with an elliptic curve, for example an elliptic curve which includes (0, 0) as a valid point. In some examples, t takes a value equal to p. In other examples, t takes a value equal to "all bits set", in other words the value corresponding to all of the m bits representing the coordinate being set to 1, i.e. $(2^m-1)$. Since the value p is communicated to the hardware component as one of the curve parameters, it is selected to fit in the selected register size of the hardware component. Similarly, the value $(2^m-1)$ fits in the selected register size of m bits.

Furthermore, setting x to t or y to t is computationally more efficient than setting both x = 0 and y = 0, or setting a dedicated error status. In particular, in some examples the value of the remaining coordinate * is not altered from the value of the projective coordinate, thus avoiding performance of a transformation to an affine coordinate for the remaining coordinate. Using an instruction for setting only one of the affine coordinates may result in reduced storage space and execution time for example.

Examples of various methods and devices for performing operations using this representation will now be described.

An elliptic curve is a curve that can be written in the Weierstrass form. The Weierstrass equation comprises two variables (in this case x and y) and is second degree for one of the variables and third degree for the other variable. Elliptic curves defined over finite fields are used in many cryptographic applications. The defined elliptic curve has a finite number of points with coordinates in the finite field F. Here, we will describe elliptic curves which are defined over a prime field. However, an elliptic curve may be defined over a finite binary field for some cryptographic applications for example. In the prime case described here, the field $F_p$ is defined by a large prime number p, and comprises the set of integers from 0 to p-1 inclusive, where the addition and the multiplication of these are performed modulo p. The value p is also referred to as the field order.

Many standards for ECC, such as ANSI X9.63 and NIST's FIPS 186 series, use elliptic curves defined using the Weierstrass equation, in other words the elliptic curve is defined by the values of the parameters a and b of the Weierstrass equation. An elliptic curve defined using the Weierstrass equation is also referred to herein as a Weierstrass type curve or a just a Weierstrass curve. A Weierstrass curve defined on the prime field $F_p$ comprises the set of points (x, y) satisfying the following equation:

$$y^2 = x^3 + ax + b \qquad\qquad (1)$$

Here, x and y are the affine co-ordinates of a point on the curve, whereas a and b are constants which define the curve. The elliptic curve is therefore defined using the parameters a and b of the Weierstrass equation above. Choosing the a, b and p values which describe a particular curve is a complex process, and therefore several bodies have published "standard" sets of these values for use by the cryptographic community. These curves are known by shorthand names, such as "NIST P256" or "Brainpool P256t1".

The values of x, y, a and b belong to $F_p$. All calculations based on the curve are performed modulo p, and the equation may also be written as: $y^2 = x^3 + ax + b$ (*mod* p). A group is defined comprising the points (x, y) satisfying equation (1) and a further point $\Omega$, which is referred to as "the point at infinity", "the neutral", "the identity" or "the identity point". The point $\Omega$ is not on the curve defined in Equation (1) and therefore does not have well-defined x and y coordinates like the other points in the group. The point $\Omega$ will be described in more detail below.

Various cryptographic algorithms can be performed by performing operations using points on the curve. For example, a Diffie-Hellman key exchange scheme is an example of a key agreement scheme that can be performed using an elliptic curve. In an example such scheme, two parties, Alice and Bob wish to perform secure communication between them. The two parties, Alice and Bob agree the a, b and p values which describe a Weierstrass curve - for example, they may agree on a standard set of these values. They also agree on a base-point G, corresponding to a point $(x_G, y_G)$ on the defined curve. Again, this may be defined in the standard. The key exchange scheme comprises the following steps:

- Alice generates a private key, which is an integer $k_1$. Alice then generates a public key $P_1$, which is a point on the curve generated by a "point-multiplication" operation $k_1.G$ . The "point-multiplication" operation is denoted herein by '.' (a dot sign), and will be described below.

- Bob generates a private key, which is an integer $k_2$, and generates a public key $P_2$ being a point on the curve generated by the "point-multiplication" operation $k_2.G$ .

- Alice sends Bob her public key, which corresponds to point $P_1$ on the curve. Bob sends Alice his public key, which corresponds to point $P_2$ on the curve.

- Alice computes the point K on the curve, corresponding to $(x_k, y_k) = k_1.P_2$ . Bob also computes the point K on the curve, but his calculation is performed as $k_2.P_1$ . The shared secret key is $x_k$ , which can then be used by Alice and Bob to encrypt and decrypt communications.

In the above key exchange scheme, a "point multiplication" operation was used, which will now be described in more detail. The "point multiplication" operation may be performed using "point addition" and "point doubling" operations. In order to describe the "point-multiplication" operation, the "point addition" operation will therefore first be described. In the "point addition" operation, two points on the curve are "added" to give a third point in the group. The "point addition" operation is denoted here by '+' (a plus sign).

Given two points P and Q on an elliptic curve defined using the Weierstrass equation (1) above, the "point addition" operation P + Q geometrically represents the further point of intersection with the elliptic curve of the line passing through the points P and Q. The coordinates of the point P are $(x_P, y_P)$ and the coordinates of the point Q are $(x_Q, y_Q)$. The coordinates of the point R = P+Q are $(x_R, y_R)$, given by:

$$x_R = \left(\frac{y_Q - y_P}{x_Q - x_P}\right)^2 - x_P - x_Q$$

$$(2)$$

$$y_R = \left(\frac{y_Q - y_P}{x_Q - x_P}\right)(x_P - x_R) - y_P$$

$$(3)$$

As explained above, these calculations are performed modulo p. To perform the point addition operation, the above calculations in (2) and (3) are performed, modulo p.

The point $\Omega$ is defined as the identity element of the point addition operation operating on the group, such that for any point P on the curve, $P + \Omega = \Omega + P$. The point addition operation P + Q is also defined to give the point at infinity $\Omega$ where $x_P = x_Q$, such that $P + Q = \Omega$ when $x_P = x_Q$. The point addition operation P + (-P) is also defined to give the point at infinity $\Omega$, where a point is negated by negating the y coordinate. In this manner, point addition of two points on the curve always gives a result in the group.

A point on an elliptic curve defined using the Weierstrass equation can also be "doubled" to give another point in the group. The "point doubling" operation may be represented as 2.P, where P is a point on the elliptic curve having coordinates $(x_P, y_P)$. The point 2.P represents the point of intersection between the elliptic curve and the line which is a tangent to the point P on the curve. The coordinates of the point 2.P = R are given by:

$$x_R = \left(\frac{3x_P^2 + a}{2y_P}\right)^2 - 2x_P$$

$$(4)$$

$$y_R = \left(\frac{3x_P^2 + a}{2y_P}\right)(x_P - x_R) - y_P$$

$$(5)$$

As explained above, these calculations are also performed modulo p. To perform the point doubling operation, the above calculations in (4) and (5) are performed, modulo p.

The point doubling operation is also defined such that $2.\Omega = \Omega$. The point doubling operation 2.P is also defined to give the point at infinity where $y_P = 0$, such that $2.P = \Omega$ when $yp = 0$ this can be thought of as a special case of $P + (-P)$. In this manner, point doubling of a point on the curve always gives a result in the group.

By repeated addition and/or doubling, a "point multiplication" operation is performed. For example, the point multiplication operation $3.P$ may be performed by performing the doubling operation $T = 2.P$ followed by the addition operation $T+P$. The point multiplication operation $4.P$ may be performed by performing the doubling operation $T = 2.P$ followed by another doubling operation $2.T$, and so on.

The point multiplication operation is a fundamental component of many ECC algorithms, such as Elliptic Curve Diffie-Hellman (ECDH) and Elliptic Curve Digital Signature Algorithm (ECDSA). The security of these cryptographic algorithms depends on the ability to compute a point multiplication (for example $k.P$) and the inability to compute the multiplicand (in this case $k$) given the original ($P$) and product points ($k.P$). The point multiplication operation is an example of a one-way function. In other words, it is computationally easy to compute an output $k.P$ for a given input $k$, however computing the input $k$ from a given output $k.P$ is computationally difficult. For example, the point multiplication function $k_2.P_1$ used to generate the shared key in the ECDH scheme described above is an example of a one-way function. The point multiplication function $k_2.P_1$ is computationally straightforward to compute. However, inverting the function to compute the value $k_2$ is a computational complex problem. In elliptic curve cryptography, this is referred to as the EC discrete logarithm problem (ECDLP). Other algorithms, such as ECDSA or EdDSA, may be performed in a similar manner. For these algorithms, additional processing is performed before and after the main point-multiplication operation.

To obtain a useful level of security, the calculations must be done with large numbers, in other words $p$ and $k$ must be large. As a result of this, a "point multiplication" on the NIST P256 curve may require 300 or more point-addition or point-doubling calculations, each of which needs a dozen or so operations on 256-bit integers. This can be slow when implemented on a CPU for example. Consequently, hardware components which are specifically configured to perform a point addition, point doubling and/or point multiplication operation based on an elliptic curve are available. These may be in the form of a hardware component such as an application specific integrated circuit (ASIC) which has the point addition, point doubling and/or point multiplication calculations efficiently implemented directly in hardware for example. Such devices are referred to as hardware coprocessors, and often accommodate many different standard curves defined using the Weierstrass equation for example. The user can therefore simply supply the $a$, $b$ and $p$ values defining the curve when requesting a point-multiplication operation. Using such devices may allow thousands or tens of thousands of operations per second to be completed for example.

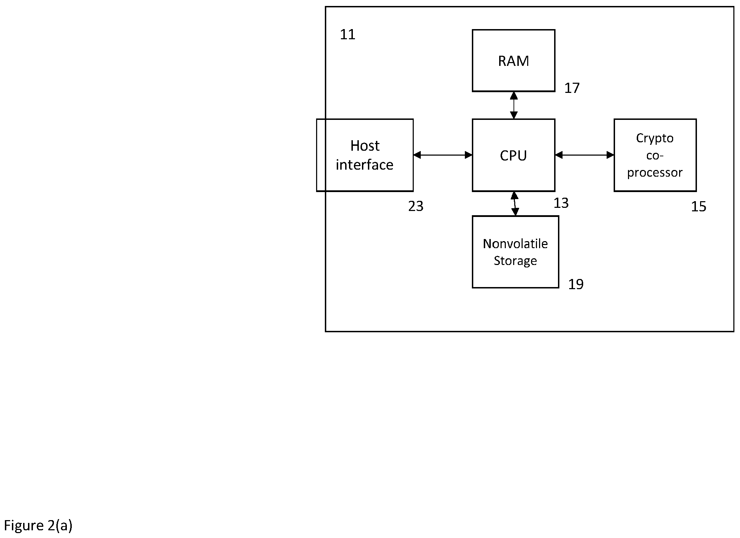

Figure 2(a) shows a schematic illustration of a device 11 comprising a CPU 13 and a hardware component 15. The device 11 may be used to perform a Diffie-Hellman key exchange scheme as described previously. For example, the device 11 is used by Bob's system to perform the operations of the Diffie-Hellman key exchange scheme described above. Bob's system communicates with the device 11 through a host interface 23. The device 11 comprises a RAM 17, which may store Bob's private key $k_2$ for example. The device 11 further comprises non-volatile storage 19 and a CPU 13. In order to perform the key exchange, Alice sends her public key $P_1$ to Bob's system. Bob provides the public key $P_1$ to the device 11 through the host interface 23. The CPU 13 sends Bob's private key $k_2$ and Alice's public key $P_1$ to a hardware co-processor 15, which performs the point multiplication operation $k_2.P_1$ using the specified elliptic curve - in other words, the curve defined with the specified values $a$, $b$ and $p$ agreed upon between Bob and Alice. The hardware co-processor 15 returns the resulting $k_2.P_1$ point coordinates to the CPU 13. The hardware co-processor 15 is a hardware component which has the point addition, point doubling and/or point multiplication calculations implemented directly in hardware.

To implement the point addition, point doubling and point multiplication operations on one or more points on an elliptic curve defined using the Weierstrass equation, the point may be represented in projective coordinates, and the operations performed using the projective coordinates. By performing the operation using projective coordinates, the operation may be performed more efficiently. For example, the hardware component 15 may perform a transformation of the input point or points into projective coordinates before performing the operation. For example, in the above described Diffie-Hellman key exchange scheme, the CPU 13 sends Bob's private key $k_2$ and Alice's public key $P_1$ to the hardware co-processor 15, with the point $P_1$ being represented in affine coordinates, in other words $(x_1, y_1)$. The hardware coprocessor 15 performs an operation to transform the affine coordinates of the input point $(x_1, y_1)$ into projective coordinates $(X_1, Y_1, Z_1)$, and then performs the point multiplication operation using the specified elliptic curve and the projective coordinates. The hardware coprocessor 15 transforms the resulting projective coordinates of the point $k_2.P_1$ into affine coordinates, and returns the affine coordinates of the output point to the CPU 13.

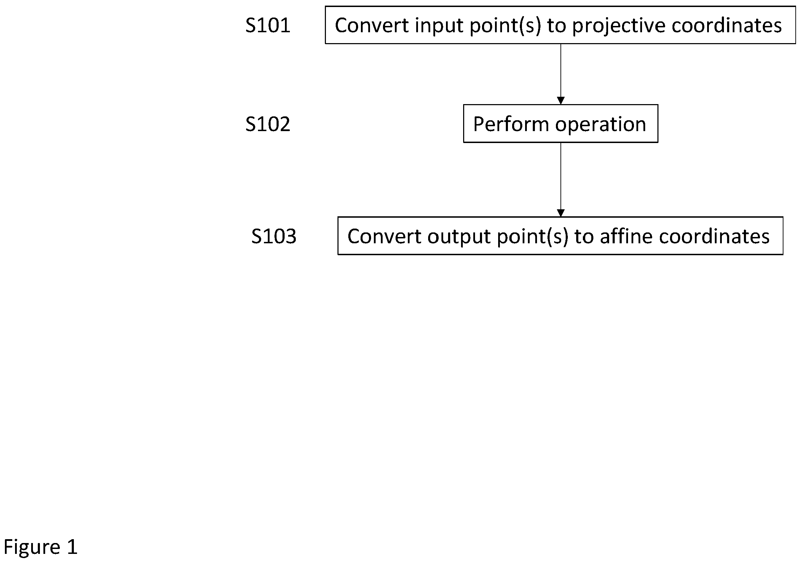

A process of performing an operation using projective coordinates will now be described in relation to Figure 1. Figure 1 shows a flow chart illustrating a method according to an embodiment. In this example, the point doubling operation is to be performed on a point $P$ on the Weierstrass curve defined in Equation (1). In affine coordinates, the point $P$ is represented by $(x_p, y_p)$. The process may be performed on a hardware component such as the hardware co-processor 15 described in relation to Figure 2(a) for example.

In step S101, the point $P$ is converted into projective coordinates $(X_P, Y_P, Z_P)$. In this example, Jacobian projective coordinates will be used. The mapping from affine coordinates $(x, y)$ into Jacobian projective coordinates $(X,$

Y, Z) is performed according to the below transformations:

$$X = xz^2$$
$$Y = yz^3$$
$$Z = z$$

$$(6)$$

where z is non-zero, and may be chosen as 1 for convenience. In the case where z is chosen as 1, the projective coordinates for point P become $(x_p, y_p, 1)$ in S101. Here, the point doubling operation is described, and therefore there is only a single input point P. However, where a point addition operation is to be performed, both input points are converted into projective coordinates in S101 for example. In this example, the hardware co-processor represents the point at infinity $\Omega$ in affine coordinates as (p, *), where p is the specified field order and * is any value. If the input point P is the point at infinity $\Omega$, it will thus be represented in affine coordinates as (p, *). A step is therefore performed prior to performing the transformation in Equation (6), whereby the input point P is checked to determine if the affine coordinate x is equal to p. If x is equal to p, then the projective coordinates are set to (*, *, 0), where * is represents any value. If x is not equal to p, then the transform in Equation (6) is performed.

In S102, the operation is performed using the Jacobian projective coordinates. In this example, the point doubling operation is performed. The projective coordinates of the point 2.P = R are given by:

$$X_R = T$$

$$(7)$$

$$Y_R = -8Y_P^4 + M(S - T)$$

$$(8)$$

$$Z_R = 2Y_P Z_P$$

$$(9)$$

where $S = 4X_P Y_P^2$, $M = 3X_P^2 + aZ_P^4$ and $T$ = -2S + $M^2$.

As explained above, these calculations are also performed modulo p. To perform the point doubling operation, the above calculations in (7) to (9) are performed. By performing the operation using projective coordinates, the operation may be performed more efficiently. In particular, the operation involves no modular division steps, and therefore may be implemented more efficiently.

As can be seen, the case yp = 0 corresponds to $Y_P$ = 0. In this case, the output of the point doubling operation is $X_R$, $Y_R$, 0), which corresponds to the point at infinity in projective coordinates. In other words, the point at infinity has well defined coordinates in projective coordinate representation, with Z=0.

In step S103, the output point $X_R$, $Y_R$, $Z_R$) from S102 is then converted into affine coordinates. The mapping from projective coordinates (X, Y, Z) into affine coordinates (x, y) is performed according to the below transformations:

$$x = X/Z^2$$
$$y = Y/Z^3$$

$$(10)$$

Where the output point from S102 is the point at infinity, $(X_R, Y_R, 0)$, the transformation in Equation (10) does not give well-defined affine coordinates. When converting the point at infinity, $(X_R, Y_R, 0)$, from projective representation to affine representation, the point is represented by the affine coordinates $x_R$= p, $y_R$ = * in this example, where p is the field order, and * represents any value. The point is represented as (p, $Y_R$), in which case the x coordinate is set as p and the value of the y coordinate is kept at the value of the projective Y coordinate. A step is therefore performed prior to performing the transformation in Equation (10), whereby the output point R is checked to determine if the projective coordinate Z is equal to 0. If Z is equal to 0, then the affine coordinates are set to (p, *). If Z is not equal to 0, then the transform in Equation (10) is performed.

The "point" (p, *) cannot be a valid point on any curve, because p is not a valid element of the field - as described previously, the field $F_p$ is defined by the large prime number p, and comprises the set of integers from 0 to p - 1 inclusive. Furthermore, setting $x_R = p$ is computationally cheaper than setting both $x_R = 0$ and $y_R = 0$.

In the above described example, the input point P and output point R are represented in affine coordinates (x, y), but internally on the hardware component the point doubling operation is performed in projective coordinates (X, Y, Z). The input and output are written into and read out of hardware co-processor registers for x and y in this example. The registers have a fixed size, where m bits are used for each affine coordinate. There may additionally be a success/fail or error flag to report error conditions such as fault conditions, timeouts, invalid inputs or similar. The point at infinity, also referred to as "the identity" or "$\Omega$", is not a point on the curve - it is not a point (x, y), where the (x, y) coordinates are members of the field over which the curve is defined. By representing the point at infinity as (p, *), the representation can be contained in the x and y registers, without needing an extra flag or status value. Furthermore, by representing the point at infinity as (p, *), the representation does not conflict with the use of a particular curve, for example a special-purpose custom elliptic curve including the point (0, 0).

An example is described above where the operation performed in S102 is a point doubling operation. Point addition operations may also be performed in S102 using projective coordinates. Where the Jacobian projective coordinates of an input point P are $(X_P, Y_P, Z_P)$ and the Jacobian projective coordinates of an input point Q are $(X_Q, Y_Q, Z_Q)$, the Jacobian projective coordinates of the point R = P+Q are $X_R, Y_R, Z_R)$, given by:

$$X_R = -H^3 - 2U_1 H^2 + r^2$$

$$(11)$$

$$Y_R = -S_1 H^3 + r(U_1 H^2 - X_R)$$

$$(12)$$

$$Z_R = Z_P Z_Q H$$

$$(13)$$

Where $U_1 = X_P Z_Q^2$, $U_2 = X_Q Z_P^2$, $S_1 = Y_P Z_Q^3$, $S_2 = Y_Q Z_P^3$, $H = U_2 - U_1$ and $r = S_2 - S_1$

As can be seen, the case $x_P = x_Q$ corresponds to $X_P/Z^2_P = X_Q/Z^2_Q$, which is equivalent to $X_P Z^2_Q = X_Q Z^2_P$. In this case, the output of the point addition operation is $(X_R, Y_R, 0)$, which again corresponds to the point at infinity in projective coordinates.

Point multiplication operations may also be performed in S102 using projective coordinates, by performing repeated addition and/or doubling. It is to be understood that the method in Figure 1 may also be used to perform other operations using points on the curve. For example, the method may be used to perform an operation comprising a combination of the point addition, point doubling or point multiplication operations.

As explained previously, Figure 2(a) is a schematic illustration of a device 11 comprising a CPU 13 and a hardware co-processor 15 in accordance with an embodiment. The device 11 is a hardware security module device 11. The hardware security module device 11 is configured to perform cryptographic functions for a client. The term 'client' is used throughout the description to refer generally to a user of the HSM device 11.

The hardware co-processor 15 is a crypto co-processor which is configured to perform one or more operations based on an elliptic curve. For example, the hardware co-processor 15 is configured to perform a point multiplication operation based on an elliptic curve defined using the Weierstrass form. The operation is implemented directly in hardware on the co-processor 15.

The CPU 13 is in wired bi-directional communication with the hardware co-processor 15. For example, the CPU 13 may communicate with the hardware co-processor 15 via a PCIe interface.

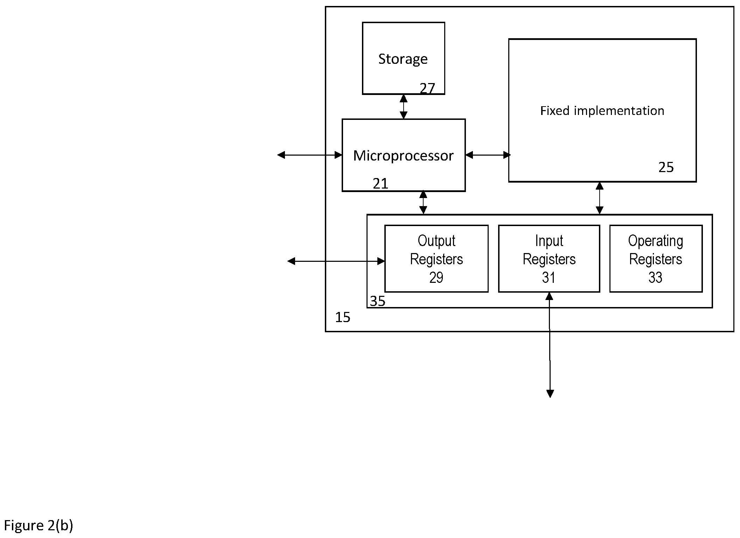

Figure 2(b) is a schematic illustration of an example hardware co-processor 15. The hardware coprocessor 15 in this example comprises an application-specific integrated circuit (ASIC). The ASIC is configured to perform a point addition, point doubling and/or point multiplication operation based on one or more Weierstrass elliptic curves. In particular, the ASIC comprises fixed logic circuitry 25 configured to receive as input one or more points on a Weierstrass elliptic curve and output the result of a point addition, point doubling or point multiplication operation. In such devices, the point addition, point doubling and/or point multiplication operations are implemented directly in hardware using a fixed implementation 25. The fixed logic circuitry 25 embodies the functionality as will be described in relation to the hardware co-processor 15 in the methods below.

The hardware co-processor 15 may further comprise a microprocessor 21 component, which is configured to execute one or more instructions stored in internal micro-code. The hardware co-processor further comprises storage component 27, which stores microcode for execution by the microprocessor 21. The microcode comprises a set of computer instructions embodying the functionality as will be described in relation to the microprocessor 21 in the methods below.

The hardware co-processor further comprises a set of registers 35. The set of registers 35 may comprise one or more input registers 31, where the input data from the CPU 13 is written into the input registers. The set of registers 35 may further comprise one or more output registers 29 which store output data, where the CPU 13 reads data from the output registers 29. The set of registers may further comprise one or more intermediate registers 33, which are configured to store data that is generated and used while executing operations (e.g. intermediate data). The register size is m bits, meaning that each output, input or intermediate value is stored in the registers is represented as m bits. A value may correspond to a point coordinate, for example an affine coordinate x or y. For example, the x coordinate of an input point represented in affine coordinates is stored in a first input register and the y coordinate of the input point is stored in a second register. Similarly, the x coordinate of an output point is stored in a first output register and the y coordinate of an output point is stored in a second output register. The fixed hardware implementation 25 and microprocessor 21 are configured to write to and read from the set of registers 35.

The hardware co-processor 15 may comprise multiple processing modules, also referred to as crypto engines. The crypto engines may be configured to concurrently perform the point operations and thus more than one point operation may be performed at the same time. The hardware co-processor 15 is also referred to as a crypto co-processor, and in this example is an ASIC. It is used to speed up Elliptic Curve calculations.

Examples of such devices include the NXP C291 Crypto Coprocessor, the NXP C292 Crypto Coprocessor, the NXP C293 Crypto Coprocessor, the MaxLinear 9240 Data Compression and Security Coprocessor, and the Intel QuickAssist Adapter 8950.

As shown in Figure 2(a), the CPU 13 is in wired bi-directional communication with non-volatile storage 19. The non-volatile storage 19 may include any form of non-volatile device memory such as flash, optical disks or magnetic hard drives, for example. The non-volatile storage 19 may be physically secure and may be resistant to tamper by a third party, for example by the inclusion of physical security such as a membrane that covers the entire device, that cannot be removed without destroying the underlying physical hardware, thus making it un-usable. The non-volatile storage 19 may store cryptographic information associated with the client, for example it may store one or more private keys.

The CPU 13 is also in wired bi-directional communication with working memory 17, corresponding to Random Access Memory 17. RAM 17 corresponds to operating memory of the CPU 13. The CPU 13 may comprise logic circuitry that responds to and processes the instructions in code in the RAM 17. In particular, when executed, a program is represented as a software product, or process, stored in the RAM 17.

Execution of various programs by the CPU 13, code by the microprocessor 21 and/or operations by the fixed implementation 25 will cause methods as described herein to be implemented.

The programs may be referred to as "firmware" in this description, however generally the programs comprise a set of computer instructions stored in non-volatile memory 19 on the HSM device 11 and embodying the functionality as will be described in relation to the CPU 13 in the methods below. The computer instructions, or firmware, may be written in any of a number of programming languages, and may be stored on the HSM device 11 as compiled code. The firmware can be embedded in the hardware security module 11 when it is manufactured, or can be provided, as a whole or in part, after manufacture. For instance, the firmware can be introduced as a computer program product, which may be in the form of a download. Alternatively, modifications to existing firmware can be made by an update, or plug-in. In order to enforce security, only software from a trusted party is accepted. Digital signing processes can be used to enforce this, and the software may be provided in a command through the host system device.

The HSM device 11 is located in a host system (not shown), for example a service provider system or a client system. The HSM 11 is communicatively coupled to a computer or server device in the host system, via host interface 23. For example, the HSM device 11 may be a PCI-express card, directly plugged in to a PCI-express card slot of the host system device. Alternatively, the HSM device 11 can be coupled by a USB connection for example.

In one arrangement, a separate client system is located remotely from the host system. The host system is a service provider system. The client system comprises a computing device or server device. The client system is communicatively coupled to the computer or server device in the host system, and thus is communicatively coupled to the HSM device 11 through the computer or server device in the host system. Communication between the client system and the host system is performed over a communication network. Communication between the client system and the host system may be performed via an Internet connection for example. In this way, multiple clients may use a HSM device 11 hosted by the service provider. The service provider system may comprise a large number of HSM devices coupled to the host computer or server device.

Alternatively, the HSM 11 is directly coupled to a computer or server device in a client system, via host interface 23. For example, the HSM device 11 may be a PCI-express card, directly plugged in to a PCI-express card slot of the client system device. Alternatively, the HSM device 11 can be coupled by a USB connection for example.

In use, the HSM device 11 receives client requests through host interface 23. The requests may correspond to performance of one or more cryptographic functions such as cryptographic key exchange as described previously. For example, a Diffie-Hellman key exchange process may be performed, in which the client receives the public key of a third party with whom they wish to communicate. This is provided to the HSM 11 via the host interface 23, together with the parameters a, b and p describing the elliptic curve which have been agreed with the third party, and a request to generate a key for communication with the third party using the Diffie-Hellman process described above.

The hardware co-processor 15 is configured to receive requests to perform one or more operations from the CPU 13 and to return to the CPU 13 the output of the operation. The CPU 13 is configured to off-load various operations to the hardware co-processor 15. The hardware co-processor 15 is separate to the CPU 13, and configured to perform certain operations in hardware, meaning that these operations may be performed more efficiently on the hardware co-processor 15 than on the CPU 13. Operations may be performed on the hardware co-processor 15 concurrently with operations performed on the CPU 13.

For example, a cryptographic algorithm may comprise a point multiplication operation followed by a point addition operation. This may be implemented as a single operation in the fixed implementation 25 on the hardware co-processor 15. In particular, the Elliptic Curve Digital Signature Algorithm (ECDSA) signature verification algorithm comprises a step comprising a point multiplication ($p.G$) and point multiplication ($r.H$), the results of which are taken as input to a point addition. The point multiplication ($p.G$), point multiplication ($r.H$) and point addition ($p.G$) + ($r.H$) may be implemented as a single operation in the fixed hardware implementation 25 in the hardware co-processor 15, and where p, r, G and H are the inputs to the operation. In particular, various "arithmetic" operations using one or more points on the curve may be performed using the method described in relation to Figure 1. Such operations take as input the coordinates of one or more points on the curve, and output the coordinates of a further point on the curve. Other algorithms, such as ECDSA or EdDSA, may be performed in a similar manner. For these algorithms, additional processing is performed before and after the main point-multiplication operation, but the interaction with the hardware co-processor 15 follows the same steps described above.

The hardware co-processor 15 is further configured to perform the mapping operations in S101 and S103, to transform affine coordinates to projective coordinates in S101 and to transform projective coordinates to affine coordinates in S103. In other words, Equations (6) and (10) are implemented in the co-processor 15. In particular, the transformation in Equations (6) and (10) are implemented in hardware or in microcode in the cryptographic co-processor 15.

In the device 11 shown in Figure 2(a), the CPU 13 runs software kept in the non-volatile storage 19, and the hardware co-processor 15 has fixed implementations, in other words hardware implementations, of cryptographic primitives, such as Weierstrass-form point multiplication as well as the microprocessor 21 running microcode. The RAM 17 keeps working data, including keys and other secrets used in computations.

In Figure 2(a) above, the hardware co-processor 15 is shown to be in wired bi-directional communication only with the CPU 13. The hardware co-processor 15 accesses the RAM 17 through the CPU 13. However, in an alternative configuration, the hardware co-processor 15 is in wired bi-directional communication with one or more other components of the HSM 11, as well as with the CPU 13. For example, the hardware co-processor 15 may directly read and write to the RAM 17. The CPU 13 may assign memory locations of the RAM 17 for Direct Memory Access (DMA), and the hardware co-processor 15 can access this set of memory access using DMA, independently of the CPU 13. For example, the CPU 17 may store one or more private keys in the RAM 17, and the hardware co-processor 15 may retrieve the private keys directly from the RAM 17, without the involvement of the CPU 13. In other examples, the hardware co-processor 15 may read and/or write to memory registers of the CPU 13.

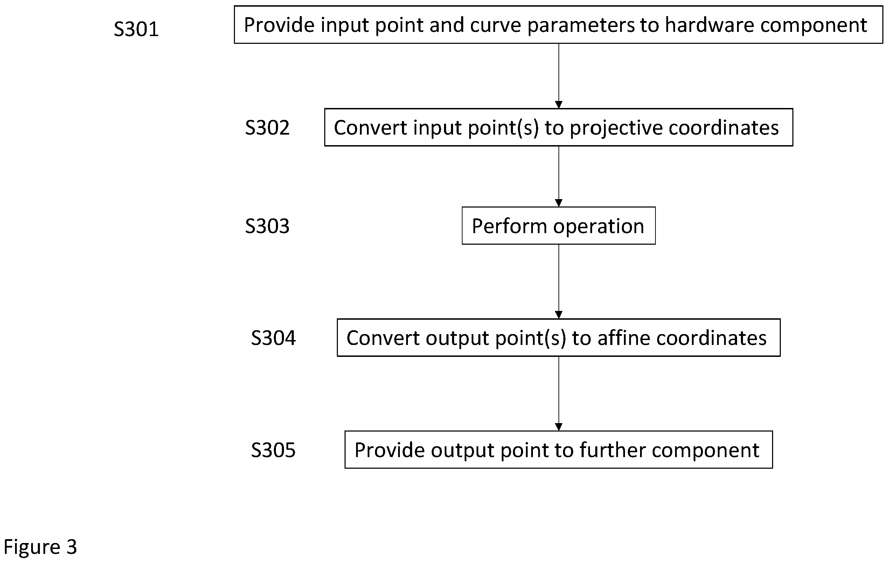

Figure 3 is a flow chart showing a method according to an embodiment. The method may be performed by the device 11 shown in Figure 2(a) for example. The method is performed as part of a Diffie-Hellman key exchange scheme in this example, however the method may be performed as part of other cryptographic algorithms.

In this example, the device 11 is used by Bob's system to perform the operations of the Diffie-Hellman key exchange scheme described above in relation to Bob. Bob's system communicates with the device 11 through a host interface 23. The device 11 comprises a RAM 17, which stores Bob's private key $k_2$ . The device 11 further comprises non-volatile storage 19 and a CPU 13. In order to perform the key exchange, Alice sends her public key $P_1$ to Bob's system. In more detail, Alice sends the x and y coordinates of the point $P_1$ to Bob's system. Bob provides the public key $P_1$ to the device 11 through the host interface 23. The CPU 13 sends Bob's private key $k_2$ and Alice's public key $P_1$ to the hardware co-processor 15 in S301. In this step, the x and y coordinates of the point $P_1$ are written into the input registers of the co-processor 15. The specified values a, b and p (agreed upon by Bob and Alice) which define the curve are also provided to the hardware co-processor 15 in this step.

In S302, the hardware coprocessor 15 converts the affine coordinates x and y into projective coordinates. In this example, Jacobian coordinates are used, and therefore the conversion is performed using the transform in Equation (6). A step is performed prior to performing the transformation in Equation (6), whereby the input point $P_1$ is checked to determine if the affine coordinate x is equal to p. If x is equal to p, then the projective coordinates are set to (*, *, 0), where * is represents any value. This may be implemented in internal microcode executed on the microprocessor 21 in the hardware co-processor 15 for example. For example, the internal microcode stored on the hardware co-processor 15 may comprise a step embodying a check which is performed before the transform to projective coordinates, to determine if the affine coordinate x is equal to p. If the x coordinate is equal to p, then the Z projective coordinate is set to 0. The transform in Equation (6) is not performed. If x is not equal to p, then the transform in Equation (6) is performed. This transform may be implemented in fixed hardware 25 on the hardware co-processor 15 or in microcode executed on the microprocessor 21.

In S303, the hardware co-processor 15 performs the point multiplication operation using the specified elliptic curve (in other words, the curve defined with the specified values a, b and p). In particular, the hardware co-processor 15 performs the operation $k_2.P_1$ using projective coordinates in S303. The operation is performed using the fixed implementation 25 in hardware.

In S304, the hardware co-processor 15 converts the resulting projective coordinates into affine coordinates using the transform in Equation (10). The hardware co-processor 15 represents the result being the point at infinity $\Omega$ as (p, *) in this example. This may be implemented in internal microcode executed on the microprocessor 21 in the hardware co-processor 15 for example. For example, the internal microcode may comprise a step embodying a check which is performed before the transform to affine coordinates, to determine if the projective coordinate Z is equal to 0. If the projective coordinate Z is equal to zero, then the x coordinate is set to p and the y coordinate is set to Y for example. The transform in Equation (10) is not performed. If the projective coordinate Z is not equal to 0, then the hardware co-processor 15 proceeds to perform the transform in Equation (10). This transform may be implemented in a fixed hardware implementation 25 on the hardware co-processor 15 or in microcode executed on the microprocessor 21.

In S305, the x and y coordinates of the point $k_2.P_1$ are written into the output registers, where they are then read by the CPU 13.

The hardware co-processor 15 therefore performs the point multiplication operation using the Weierstrass curve specified by the values a, b and p and returns the resulting $k_2.P_1$ point affine coordinates to the CPU 13, which then extracts the shared secret key $x_k$. This can then be used by Alice and Bob to encrypt and decrypt communications between them.

The hardware co-processor 15 is used to carry out elliptic curve point multiplication operations. The hardware co-processor 15 which supports a point multiplication operation in projective coordinates based on a curve defined using the Weierstrass equation is used when implementing the cryptographic algorithm in this example, in order to perform the operation more efficiently. The hardware co-processor 15 represents the result of a calculation being the point at infinity $\Omega$ as (p, *) in this example. This representation is returned to the CPU 13 if the result of the operation is $\Omega$. By representing the point at infinity as (p, *), the representation can be contained in the x and y registers of the hardware co-processor, without needing an extra flag or status value to be returned from the co-processor 15. This representation therefore mitigates the limitations of a fixed hardware interface between a hardware co-processor 15 and a general purpose CPU 13. The representation is used to represent the point at infinity where it has to be transferred from the hardware co-processor 15 to the CPU 13 in affine coordinates.

In the above described Diffie-Hellman key exchange scheme, Bob uses a public key provided by Alice to compute the point K on the curve using a point multiplication operation. Bob also provides his own public key $P_2$ to Alice. This public key $P_2$ is also generated using a point multiplication operation. In other words, a point multiplication operation is used to compute the public key counterpart $P_2$ of the private key $k_2$. While the public key $P_2$ is to be openly distributed, the private key $k_2$ is to be kept secret. The set of parameters a, b and p describing the curve are agreed between Bob and Alice. Bob and Alice also agree a parameter G, which is a point on the curve referred to as a base point or a generator. A parameter n is the order of G, where the value of n is the smallest positive number such that n.G = $\Omega$ (the point at infinity of the curve). The value of n can be thought of as the number of possible points that can be generated through point multiplication of G. A further parameter h is the cofactor. The parameters [A, B, p, G, n and h] are referred to as the domain parameters, and these describe the curve. As explained above, Alice and Bob would not usually generate a set of domain parameters themselves, but rather agree on a set of domain parameters published by a standard body. Such standard sets of domain parameters may also be referred to as "standard curves". To generate

the public key $P_2$, the point multiplication operation $P_2 = k_2.G$ is performed. Each time a new public and private key pair are generated, the multiplicand k varies but G is fixed in advance.

An operation which is performed as part of various elliptic curve algorithms is to verify that a received point Q is a point on the specified curve. This involves checking that $n.Q = \Omega$ (the point at infinity). As described above, n is the group order of the specified elliptic curve, and may be specified in a standard which defines the curve for example.

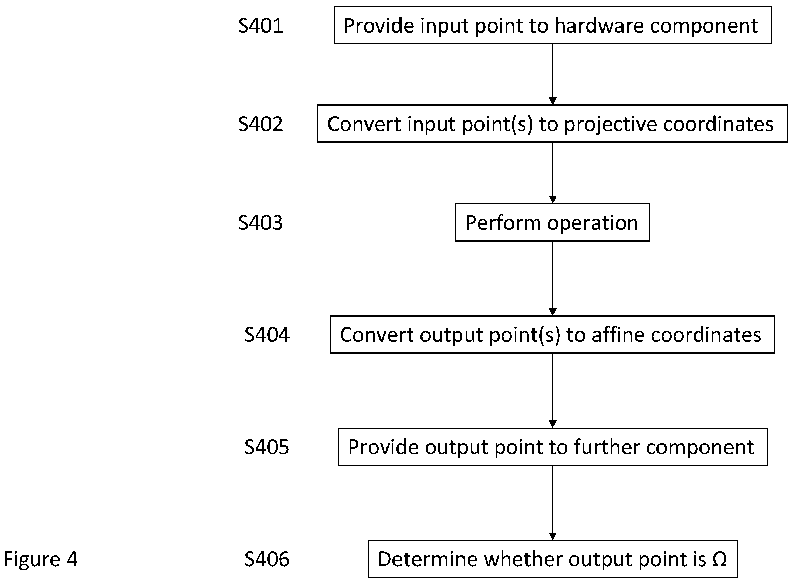

Figure 4 is a flow chart showing a method according to an embodiment. The method is performed to determine whether a point is a valid point on a specified curve. The method may be performed by the device 11 shown in Figure 2(a) for example.

In this example, the method is performed as part of a Diffie-Hellman key exchange scheme, in which the two parties, Alice and Bob agree the parameters of an elliptic curve, including the parameter n. During the exchange scheme, Alice sends Bob her public key, which corresponds to point $P_1$. Prior to performing the computation $k_2.P_1$, Bob first confirms that received point $P_1$ is a point on the specified curve, by performing the calculation $n.P_1$ and confirming that the result is $\Omega$.

As described previously, in order to perform the key exchange, Alice sends her public key $P_1$ to Bob's system. In more detail, Alice sends the x and y coordinates of the point $P_1$ to Bob's system. Bob provides the public key $P_1$ to the device 11 through the host interface 23. The CPU 13 sends Alice's public key $P_1$ to the hardware co-processor 15 in S401. In this step, the x and y coordinates of the point $P_1$ are written into the input registers of the co-processor 15. The specified values a, b, n and p (agreed upon by Bob and Alice) which define the curve are also provided to the hardware co-processor 15 in this step.

In S402, the hardware coprocessor 15 converts the affine coordinates x and y into projective coordinates as described previously in relation to S302.

In S403, the hardware co-processor 15 performs the operation. In this example, the operation is the point multiplication operation $n.P_1$, which is performed using the parameters of the specified elliptic curve (in other words, the curve defined with the specified values a, b, n and p). In particular, the hardware co-processor 15 performs the operation $n.P_1$ using projective coordinates in S403 using a fixed hardware implementation 25.

In S404, the hardware co-processor 15 converts the resulting projective coordinates into affine coordinates as described previously in relation to S304.

In S405, the x and y coordinates of the point $n.P_1$ are written into the output registers, where they are then read by the CPU 13. If the outcome of the operation $n.P_1$ is the point at infinity, this will be converted to the affine coordinates (p, Y) in S404 in this example. The value p will therefore be written in the output register corresponding to the x coordinate in S405, and the value of the Y projective coordinate is written into the output register corresponding to the y affine coordinate in S405.

The CPU 13 then performs a step of determining whether the output point is the point at infinity in S406. The CPU 13 reads the x affine coordinate from the hardware co-processor 15 registers, and determines if the value of x is equal to p. If x is equal to p, then the CPU 13 determines that the point $P_1$ is a valid point on the curve specified by the parameters a, b, p and n, and proceeds with the next steps of the key exchange operation. In this case, the next step is to perform the operation $k_2.P_1$. Testing that x is equal to p in the CPU 13 is computationally cheaper than testing that both x is equal to 0 and y is equal to 0 for example. Step S406 is implemented in software which is executed by the CPU 13. For example, the check in S406 may be implemented in the device driver corresponding to the hardware co-processor 15, when the data read from the hardware co-processor output register is converted to a device-neutral data format.

The method described in relation to Figure 4 can be performed by Bob's system, in order to validate that Alice's public key is a valid point on the specified curve for example. Although the above described example is based on a Diffie-Hellman key exchange scheme, other cryptographic algorithms also involve a step of confirming that a received point is a valid point on the curve, by performing a point multiplication operation and confirming that the result is the point at infinity. The method described in relation to Figure 4 can therefore be used in other cryptographic algorithms.

Furthermore, although in the above described example, the output of the determination step S406 is checked to confirm that it is the point at infinity, and therefore that the input point is a valid point on the curve, in other examples, the output of the determination step S406 is checked to confirm that it is not the point at infinity. For example, an Elliptic Curve Digital Signature Algorithm (ECDSA) signature verification algorithm involves a confirmation that a calculated point is not the point at infinity. This step may be performed using the method described in relation to Figure 4, where the point is calculated in S403, and the output of the determination in S406 is checked to confirm that the output point is not the point at infinity. An Elliptic Curve Diffie-Hellman key exchange scheme also involves a step of confirming that $k_1.P_2 \neq \Omega$ in Alice's system and that $k_2.P_1 \neq \Omega$ in Bob's system for example, which again may be performed using the method of Figure 4.

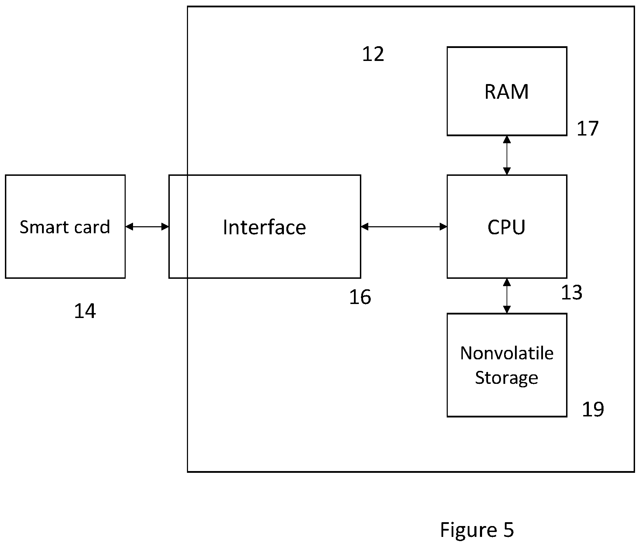

Figure 5 is a schematic illustration of a system according to an embodiment, comprising a computing device 12 and a smart card device 14. The above described methods may alternatively be implemented on the system of Figure 5 for example.

The computing device 12 may be a general purpose computer, a mobile device or a server device for example.

The computing device comprises a CPU 13, RAM 17, non-volatile storage 19 and a smart card interface 16.

The CPU 13 is in wired bi-directional communication with the non-volatile storage 19. The non-volatile storage 19 may include any form of non-volatile device memory such as flash, optical disks or magnetic hard drives, for example. The CPU 13 is also in wired bi-directional communication with working memory 17, corresponding to Random Access Memory 17. RAM 17 corresponds to operating memory of the CPU 13. The CPU 13 may comprise logic circuitry that responds to and processes the instructions in code in the RAM 17. In particular, when executed, a program is represented as a software product, or process, stored in the RAM 17.

The smart card interface 16 comprises connector contacts for example, which connect to corresponding contacts on the smart card 16. Data may be transferred from the CPU 13 to the smart card 14 and from the smart card 14 to the CPU 13 through the interface 16, when the smart card 14 is connected to the interface 16.

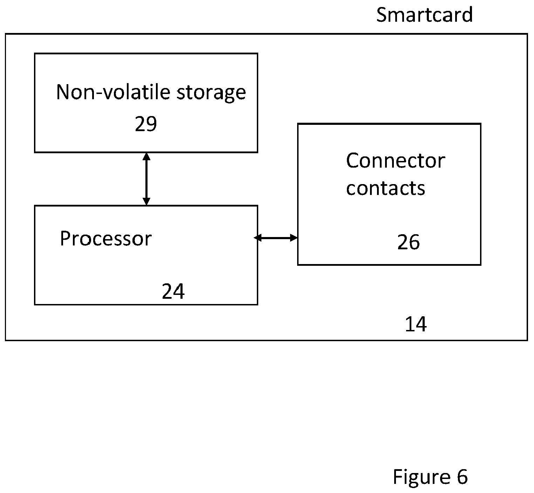

Figure 6 is a schematic illustration of an example smartcard device 14 which may be included in the system of Figure 5. The smart card device 14 comprises non-volatile or persistent storage 29. The storage 29 stores information, such as cryptographic keys. The non-volatile storage 29 may include any form of non-volatile device memory such as flash, optical disks or magnetic hard drives for example. The processor 24 comprises fixed circuitry. The processor 24 contains the logic for terminating one end of the communication channel with the computing device 12.

The processor 24 further comprises fixed circuitry configured to perform an operation, such as a point addition, point doubling and/or point multiplication operation, based on one or more elliptic curves. For example, the processor 24 comprises fixed circuitry configured to perform a point addition, point doubling and/or point multiplication operation based on a Weierstrass elliptic curve.

Execution of various programs by the CPU 13 and the processor 24 will cause methods as have been described herein to be implemented.

The methods described above may alternatively be implemented using the system of Figure 5. For example, it may be desired to perform a point multiplication operation k.P for a point P on the curve defined in Equation (1). The a and b values and the prime number p describing the Weierstrass curve are provided to the smart card 14 from the CPU 13. The smart card 14 is configured to perform a point multiplication operation for a point in projective coordinates. The point P is transformed to projective coordinates as defined in Equation (6). This may be performed on the smart card 14 for example. The point multiplication operation k.P is then performed on the smart card 14. The integer value k, which may correspond to the user private key, is stored in the non-volatile storage 29 on the smart card 14. The result is transformed to affine coordinates. This transform may be performed on the smart card 14, and the affine coordinates transferred to the CPU 13, where the result $\Omega$ is transformed to (p, *) in this example. These coordinates are then transferred to the CPU 13.

Although the above described methods are described as being implemented on the HSM 11 described in relation to Figure 2 or on the system described in relation to Figure 5, it will be understood that the methods may be implemented on various other systems comprising various other devices. In some examples, the methods may be implemented party or wholly in software.

Although the above described examples use elliptic curves which are defined using the Weierstrass equation, for many cryptographic applications, elliptic curves defined differently may be used. For example, in recent years, elliptic curves defined using the Montgomery equation have received attention from the cryptography community. Cryptographic operations using an elliptic curve defined with a Montgomery equation also use a group comprising the points having affine coordinates (x, y) satisfying the curve equation and a further point $\Omega$, which is referred to as "the point at infinity" or the identity point. Thus in other examples, the above described methods may be performed using a curve defined with a Montgomery equation for example. Cryptographic operations using an elliptic curve defined with an Edwards equation also use a group comprising the points having affine coordinates (x, y) satisfying the curve equation and a further point $\Omega$, which is referred to as "the point at infinity" or the identity point. Thus in other examples, the above described methods may be performed using a curve defined with an Edwards equation for example. For example, Edwards curves may be used in EdDSA and Ed25519 cryptographic algorithms. Edwards curves also use an identity element (point at infinity) which is well defined in projective coordinates.

Although in the above description, examples are described in which Jacobian projective coordinates are used, in other examples, other types of projective coordinates may be used. The various types of projective coordinates allow $\Omega$ to be represented with Z = 0. For example, standard projective coordinates may be used, for which the transform in Equation (6) is replaced by:

$$X = xz$$
$$Y = yz$$
$$Z = z$$

$$(14)$$

The transform in Equation (10) is replaced by:

$$x = X/Z$$
$$y = Y/Z$$

$$(10)$$

Other types of projective coordinates may be used, such as Chudnovsky projective coordinates or modified Jacobian coordinates for example.

In the above described examples, when converting the point at infinity, (X, Y, 0), from projective representation to affine representation, the point is represented by the affine coordinates x= p, y = *, where p is the field order, and * represents any value. In alternative examples, the point at infinity may be represented as (*, p) in affine coordinates, in which case the y coordinate is set as p and the value of the x coordinate may be any value. For example, the point may be represented as $X_R$, p), in which case the y coordinate is set as p and the value of the x coordinate is kept as the value of the projective X coordinate. The value of p may change as different curves are specified by the party using the device 11. However, both the CPU 13 and the hardware coprocessor 15 are provided with the value of p for each requested operation, and can therefore use the current specified value of p to represent the point at infinity. In alternative examples, the point at infinity may be represented by x= $(2^m-1)$, y= *, where the hardware component represents an affine coordinate using an m bit register. In alternative examples, the point at infinity may be represented by x=*, y= $(2^m-1)$.

In the above described examples, the methods are described as being implemented on the hardware security module 11 shown in Figure 2(a), which comprises a co-processor 15 comprising an ASIC. However, the co-processor 15 may alternatively comprise a Field Programmable Gate Array (FPGA). For example the hardware coprocessor 15 may comprise an FPGA which has been programmed to implement one or more operations on elliptic curves defined using the Weierstrass equation. The FPGA component may be a System on Chip FPGA. The FPGA component may comprise a plurality of registers. For example, the FPGA component may comprise a plurality of registers such as those described in relation to Figure 2(b). The FPGA component may further comprise a microprocessor for example.

Although examples in which the co-processor 15 comprises an ASIC or an FPGA are described above, it will be understood that the hardware co-processor 15 may comprise any hardware device which is configured to perform one or more operations on an elliptic curve, in other words in which these operations are implemented in hardware.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

**Claims**

1. A computer implemented method of performing an operation, the method comprising:

   obtaining a projective coordinate representation of a first point on a first elliptic curve defined on a finite field, wherein the finite field is defined by a field order;
   performing a first operation using the projective coordinate representation of the first point to determine a projective coordinate representation of a second point on the first elliptic curve; and
   obtaining an affine coordinate representation of the second point, wherein when the second point is an identity point, the affine coordinate representation comprises an affine coordinate which has a value greater than or equal to the field order.

2. The method according to claim 1, wherein the first operation is a point multiplication operation, a point addition operation, a point doubling operation or a combination of one or more of these operations.

**3.** The method according any preceding claim, further comprising:
providing an affine coordinate representation of the first point, wherein the projective coordinate representation of the first point is obtained from the affine coordinate representation of the first point.

**4.** The method according to any preceding claim, wherein when the second point is an identity point, the affine coordinate representation comprises a further coordinate which has a value equal to a projective coordinate of the second point.

**5.** The method according to any preceding claim, wherein the field is a prime field, and wherein the field order is a prime number p.

**6.** The method according to any preceding claim, wherein when the second point is the identity point, the affine coordinate has a value equal to the field order.

**7.** The method according to any preceding claim, wherein the first operation is performed on a first processor module which supports the first operation.

**8.** The method according to claim 7 when dependent on any of claims 1 to 5, wherein the first processor module comprises a set of one or more registers having a bit size of m bits, and wherein when the second point is the identity point, the affine coordinate has a value equal to $(2^m-1)$.

**9.** The method according to claim 7 or 8, wherein the first processor module obtains the projective coordinate representation of the first point and obtains the affine coordinate representation of the second point, the method further comprising providing the affine coordinate representation of the second point to the first processor module.

**10.** The method according to claim 9, further comprising:
determining, by the first processor module, whether the second point is the identity point.

**11.** The method according to claim 10, wherein determining whether the second point is the identity point comprises determining whether the affine coordinate has a value equal to the field order or comprises determining whether the affine coordinate has a value equal to $(2^m-1)$.

**12.** The method according to claim 11, wherein determining whether the second point is the identity point does not comprise confirming the value of the further affine coordinate.

**13.** The method according to any of claims 10 to 12, wherein if it is determined that the second point is the identity point, one or more further cryptographic operations are performed.

**14.** A device, comprising a processor module configured to:

obtain a projective coordinate representation of a first point on a first elliptic curve defined on a finite field, wherein the finite field is defined by a field order;
perform a first operation using the projective coordinate representation of the first point to determine a projective coordinate representation of a second point on the first elliptic curve; and
obtain an affine coordinate representation of the second point, wherein when the second point is an identity point, the affine coordinate representation comprises a coordinate which has a value greater than or equal to the field order.

**15.** A carrier medium comprising computer readable code configured to cause a computer to perform the method of any of claims 1 to 13.

S101 | Convert input point(s) to projective coordinates

S102 | Perform operation

S103 | Convert output point(s) to affine coordinates

Figure 1

Figure 2(a)

Figure 2(b)

S301     Provide input point and curve parameters to hardware component

S302     Convert input point(s) to projective coordinates

S303     Perform operation

S304     Convert output point(s) to affine coordinates

S305     Provide output point to further component

Figure 3

EP 4 246 879 A1

EP 4 246 879 A1

| S401 | Provide input point to hardware component |

$\downarrow$

| S402 | Convert input point(s) to projective coordinates |

$\downarrow$

| S403 | Perform operation |

$\downarrow$

| S404 | Convert output point(s) to affine coordinates |

$\downarrow$

| S405 | Provide output point to further component |

$\downarrow$

Figure 4      | S406 | Determine whether output point is $\Omega$ |

Figure 5

Smartcard

Non-volatile storage
29

Processor
24

Connector contacts
26

14

Figure 6

Europäisches
Patentamt

European
Patent Office

Office européen
des brevets

# EUROPEAN SEARCH REPORT

Application Number

EP 22 27 5030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "IEEE P1363 / D13 . Standard Specifications for Public Key Cryptography Annex A (Informative). Number-Theoretic Background. ; P1363-A-11-12-99", IEEE DRAFT; P1363-A-11-12-99, IEEE-SA, PISCATAWAY, NJ USA, vol. 1363, 11 November 2004 (2004-11-11), pages 1-96, XP017608938, [retrieved on 2004-11-11] | 1-10, 13-15 | INV. H04L9/30 |
| A | * section A.9 * | 11,12 | |
| X | Nick Nick: "ecc.c: representing the point at infinity in affine coordinates", , 30 May 2019 (2019-05-30), pages 1-1, XP055957963, Retrieved from the Internet: URL:https://lists.gnupg.org/pipermail/gnuk-users/2019-May/000222.html [retrieved on 2022-09-06] | 1-10, 13-15 | |
| A | * the whole document * | 11,12 | TECHNICAL FIELDS SEARCHED (IPC) |
| A | Anonymous Nick: "ecc.c: representing the point at infinity in affine coordinates", , 31 May 2019 (2019-05-31), pages 1-2, XP055957941, Retrieved from the Internet: URL:https://lists.gnupg.org/pipermail/gnuk-users/2019-May/000224.html [retrieved on 2022-09-06] * page 1 * | 1-15 | H04L |

The present search report has been drawn up for all claims

| Place of search | Date of completion of the search | Examiner |
|---|---|---|
| Munich | 6 September 2022 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)